# EUROPEAN PATENT SPECIFICATION

(11) **EP 3 036 934 B1**
(45) Date of publication and mention of the grant of the patent: **28.12.2016**
(21) Application number: 14759083.0
(22) Date of filing: 21.08.2014
(51) Int. Cl.: H04W 28/16, H04W 28/02, H04L 1/18, H04B 7/15, H04B 7/155, H04L 5/00, H04W 84/12, H04L 1/00

(54) **TRANSMIT OPPORTUNITY (TXOP) SHARING**
TEILEN VON SENDEGELEGENHEITEN (TXOP)
PARTAGE DE POSSIBILITÉ DE TRANSMISSION (TXOP)

(30) Priority: 21.08.2013 US 201361868578 P; 22.08.2013 US 201361869061 P; 28.08.2013 US 201361871303 P; 20.08.2014 US 201414464542
(43) Date of publication of application: 29.06.2016
(60) Divisional application: 16182604.5
(73) Proprietor: Qualcomm Incorporated, San Diego, CA 92121-1714 (US)
(72) Inventor: JAFARIAN, Amin, Princeton, New Jersey 08540 (US); ASTERJADHI, Alfred, San Diego, California 92121 (US)
(74) Representative: Wagner & Geyer
(86) International application number: PCT/US2014/052007
(87) International publication number: WO 2015/027016

(56) References cited:
- EP-A2- 2 547 008
- US-A1- 2010 040 033
- YOUNG HOON KWON (HUAWEI): "Implicit ACK for Relay ; 11-13-0075-00-00ah-implicit-ack-for-relay" , IEEE SA MENTOR; 11-13-0075-00-00AH-IMPLICIT-ACK-FOR-RELAY, IEEE-SA MENTOR, PISCATAWAY, NJ USA, vol. 802.11ah, 15 January 2013 (2013-01-15), pages 1-11, XP068040474, [retrieved on 2013-01-15]
- ALFRED ASTERJADHI (QUALCOMM INC): "CC9-Resolution-CIDs-18+119+360+532+533+66 0+661+662+869 ; 11-13-0816-01-00ah-cc9-resolution-cids-18- 119-360-532-533-660-661-662-869", IEEE SA MENTOR; 11-13-0816-01-00AH-CC9-RESOLUTION-CIDS-18- 119-360-532-533-660-661-662-869, IEEE-SA MENTOR, PISCATAWAY, NJ USA, vol. 802.11ah, no. 1, 18 July 2013 (2013-07-18), pages 1-7, XP068054439, [retrieved on 2013-07-18]
- MINYOUNG PARK (INTEL): "Specification framework for TGah ; 11-11-1137-14-00ah-specification-framework -for-tgah", IEEE SA MENTOR; 11-11-1137-14-00AH-SPECIFICATION-FRAMEWORK -FOR-TGAH, IEEE-SA MENTOR, PISCATAWAY, NJ USA, vol. 802.11ah, no. 14, 20 March 2013 (2013-03-20), pages 1-66, XP068053521, [retrieved on 2013-03-20]
- ZHOU YUAN ET AL: "Advances in IEEE 802.11ah standardization for machine-type communications in sub-1GHz WLAN", 2013 IEEE INTERNATIONAL CONFERENCE ON COMMUNICATIONS WORKSHOPS (ICC), IEEE, 9 June 2013 (2013-06-09), pages 1269-1273, XP032518475, DOI: 10.1109/ICCW.2013.6649432 [retrieved on 2013-10-28]

## Description

### BACKGROUND

### Field of the Invention

Certain aspects of the present disclosure generally relate to wireless communications and, more particularly, to rules for determining how to acknowledge a block of MAC protocol data units.

### Relevant Background

Wireless communication networks are widely deployed to provide various communication services such as voice, video, packet data, messaging, broadcast, etc. These wireless networks may be multiple-access networks capable of supporting multiple users by sharing the available network resources. Examples of such multiple-access networks include Code Division Multiple Access (CDMA) networks, Time Division Multiple Access (TDMA) networks, Frequency Division Multiple Access (FDMA) networks, Orthogonal FDMA (OFDMA) networks, and Single-Carrier FDMA (SC-FDMA) networks.

In order to address the desire for greater coverage and increased communication range, various schemes are being developed. One such scheme is the sub-1-GHz frequency range (e.g., operating in the 902 - 928 MHz range in the United States) being developed by the Institute of Electrical and Electronics Engineers (IEEE) 802.11 ah task force. This development is driven by the desire to utilize a frequency range that has greater wireless range than other IEEE 802.11 groups and has lower obstruction losses.

Attention is drawn to document YOUNG HOON KWON (HUAWEI): "Implicit ACK for Relay; 11-13-0075-00-00ah-implicit-ack-for-relay", IEEE SA MENTOR; 11-13-0075-00-00AH-IMPLICIT-ACK-FOR-RELAY, vol. 802.11ah, 15 January 2013, pages 1-11, XP068040474. This document relates to a single TXOP forwarding scheme without an ACK frame from Relay Station without increasing uncertainty.

### SUMMARY

Aspects of the present disclosure provide an apparatus for wireless communications. The apparatus generally includes means for generating a frame; means for indicating, via a value of at least one bit of a field of the frame, whether to allow transmit opportunity (TXOP) sharing during which a relay is allowed to forward the frame in the same TXOP in which the frame was transmitted wherein the frame comprises a short frame and the field comprises a field of a short media access control, MAC, header of the short frame, wherein the value of the at least one bit controls behavior of TXOP sharing regardless of a value of a More Data field in the short frame; and means for transmitting the frame.

Aspects of the present disclosure provide a computer readable medium storing computer executable code. The executable code generally includes instructions for generating a frame; indicating, via a value of at least one bit of a field of the frame, whether to allow transmit opportunity (TXOP) sharing during which a relay is allowed to forward the frame in the same TXOP in which the frame was transmitted wherein the frame comprises a short frame and the field comprises a field of a short media access control, MAC, header of the short frame, wherein the value of the at least one bit controls behavior of TXOP sharing regardless of a value of a More Data field in the short frame; and transmitting the frame.

Aspects of the present disclosure provide a method for wireless communications. The method generally includes generating a frame; indicating, via a value of at least one bit of a field of the frame, whether to allow transmit opportunity (TXOP) sharing during which a relay is allowed to forward the frame in the same TXOP in which the frame was transmitted wherein the frame comprises a short frame and the field comprises a field of a short media access control, MAC, header of the short frame, wherein the value of the at least one bit controls behavior of TXOP sharing regardless of a value of a More Data field in the short frame; and transmitting the frame.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.
FIG. 1 illustrates a diagram of an example wireless communications network, in accordance with certain aspects of the present disclosure.
FIG. 2 illustrates a block diagram of an example access point and user terminals, in accordance with certain aspects of the present disclosure.
FIG. 3 illustrates a block diagram of an example wireless device, in accordance with certain aspects of the present disclosure.
FIG. 4 illustrates an example frame control field (FCF), in accordance with certain aspects of the present disclosure.
FIGs. 5-8 illustrate examples of transmit opportunity (TXOP) sharing that may be controlled, in accordance with certain aspects of the present disclosure.
FIG. 9 illustrates a block diagram of example operations for wireless communications by an initiator, in accordance with certain aspects of the present disclosure.
FIG. 9A illustrates example means capable of performing the operations shown in FIG. 9.
FIG. 10 illustrates a block diagram of example operations for wireless communications by an apparatus, in accordance with certain aspects of the present disclosure.
FIG. 10A illustrates example means capable of performing the operations shown in FIG. 10.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

The acronyms listed below may be used herein, consistent with commonly recognized usages in the field of wireless communications. Other acronyms may also be used herein, and if not defined in the list below, are defined where first appearing herein.
- ACK: Acknowledgement
- A-MPDU: Aggregated Media Access Control Protocol Data Unit
- AP: Access Point
- BA: Block ACK
- BAR: Block ACK Request
- CRC: Cyclic Redundancy Check
- DIFS: Distributed Interframe Space
- EOF: End of Frame
- EIFS: Extended Interframe Space
- FCS: Frame Check Sequence
- ID: Identifier
- IEEE: Institute of Electrical and Electronic Engineers
- LTF: Long Training Field
- MAC: Media Access Control
- MSB: Most Significant Bit
- MIMO: Multiple Input Multiple Output
- MPDU: MAC Protocol Data Unit
- MU: Multi-User
- MU-MIMO: Multi-User Multiple Input Multiple Output
- NDP: Null Data Packet
- OFDM: Orthogonal Frequency Division Modulation
- OFDMA: Orthogonal Frequency Division Multiple Access
- PHY: Physical Layer
- PLCP: Physical Layer Convergence Protocol
- PPDU: PLCP Protocol Data Unit
- PSDU: PLCP Service Data Unit
- QoS: Quality of Service
- RDG: Reverse Direction Grant
- SDMA: Spatial-Division Multiple Access
- SIFS: Short Interframe Space
- SIG: Signal (e.g., Sub 1GHz)
- STA: Station
- STBC: Space-Time Block Coding
- STF: Short Training Field
- SU: Single User
- TCP: Transmission Control Protocol
- VHT: Very High Throughput
- WLAN: Wireless Local Area Network

### AN EXAMPLE WIRELESS COMMUNICATION SYSTEM

The techniques described herein may be used for various broadband wireless communication systems, including communication systems that are based on an orthogonal multiplexing scheme. Examples of such communication systems include Spatial Division Multiple Access (SDMA), Time Division Multiple Access (TDMA), Orthogonal Frequency Division Multiple Access (OFDMA) systems, Single-Carrier Frequency Division Multiple Access (SC-FDMA) systems, and so forth. An SDMA system may utilize sufficiently different directions to simultaneously transmit data belonging to multiple user terminals. A TDMA system may allow multiple user terminals to share the same frequency channel by dividing the transmission signal into different time slots, each time slot being assigned to different user terminal. An OFDMA system utilizes orthogonal frequency division multiplexing (OFDM), which is a modulation technique that partitions the overall system bandwidth into multiple orthogonal sub-carriers. These sub-carriers may also be called tones, bins, etc. With OFDM, each sub-carrier may be independently modulated with data. An SC-FDMA system may utilize interleaved FDMA (IFDMA) to transmit on sub-carriers that are distributed across the system bandwidth, localized FDMA (LFDMA) to transmit on a block of adjacent sub-carriers, or enhanced FDMA (EFDMA) to transmit on multiple blocks of adjacent sub-carriers. In general, modulation symbols are sent in the frequency domain with OFDM and in the time domain with SC-FDMA.

The teachings herein may be incorporated into (e.g., implemented within or performed by) a variety of wired or wireless apparatuses (e.g., nodes). In some aspects, a wireless node implemented in accordance with the teachings herein may comprise an access point or an access terminal.

An access point ("AP") may comprise, be implemented as, or known as a Node B, Radio Network Controller ("RNC"), evolved Node B (eNB), Base Station Controller ("BSC"), Base Transceiver Station ("BTS"), Base Station ("BS"), Transceiver Function ("TF"), Radio Router, Radio Transceiver, Basic Service Set ("BSS"), Extended Service Set ("ESS"), Radio Base Station ("RBS"), or some other terminology.

An access terminal ("AT") may comprise, be implemented as, or known as a subscriber station, a subscriber unit, a mobile station (MS), a remote station, a remote terminal, a user terminal (UT), a user agent, a user device, user equipment (UE), a user station, or some other terminology. In some implementations, an access terminal may comprise a cellular telephone, a cordless telephone, a Session Initiation Protocol ("SIP") phone, a wireless local loop ("WLL") station, a personal digital assistant ("PDA"), a handheld device having wireless connection capability, a Station ("STA"), or some other suitable processing device connected to a wireless modem. Accordingly, one or more aspects taught herein may be incorporated into a phone (e.g., a cellular phone or smart phone), a computer (e.g., a laptop), a tablet, a portable communication device, a portable computing device (e.g., a personal data assistant), an entertainment device (e.g., a music or video device, or a satellite radio), a global positioning system (GPS) device, or any other suitable device that is configured to communicate via a wireless or wired medium. In some aspects, the node is a wireless node. Such wireless node may provide, for example, connectivity for or to a network (e.g., a wide area network such as the Internet or a cellular network) via a wired or wireless communication link.

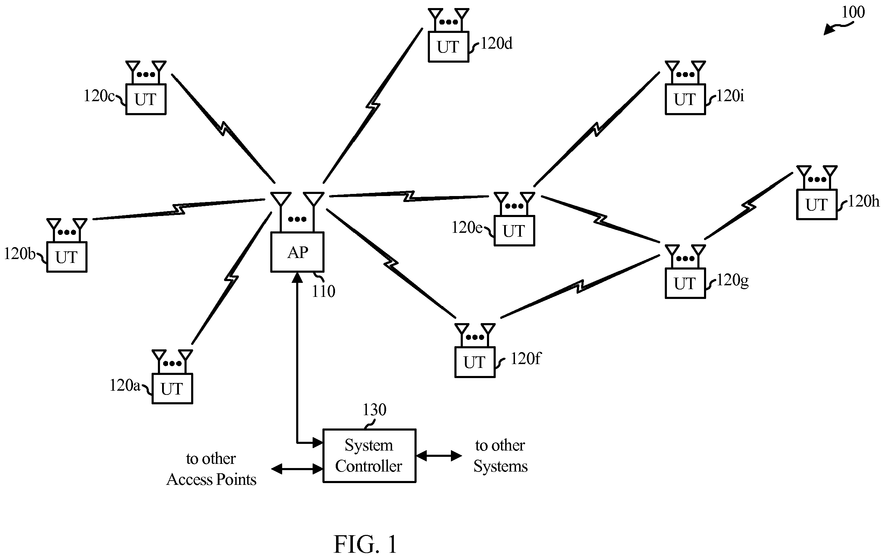

FIG. 1 illustrates a multiple-access multiple-input multiple-output (MIMO) system 100 with access points and user terminals. For simplicity, only one access point 110 is shown in FIG. 1. An access point is generally a fixed station that communicates with the user terminals and may also be referred to as a base station or some other terminology. A user terminal may be fixed or mobile and may also be referred to as a mobile station, a wireless device, or some other terminology. Access point 110 may communicate with one or more user terminals 120 at any given moment on the downlink and uplink. The downlink (i.e., forward link) is the communication link from the access point to the user terminals, and the uplink (i.e., reverse link) is the communication link from the user terminals to the access point. A user terminal may also communicate peer-to-peer with another user terminal. A system controller 130 couples to and provides coordination and control for the access points.

While portions of the following disclosure will describe user terminals 120 capable of communicating via Spatial Division Multiple Access (SDMA), for certain aspects, the user terminals 120 may also include some user terminals that do not support SDMA. Thus, for such aspects, an AP 110 may be configured to communicate with both SDMA and non-SDMA user terminals. This approach may conveniently allow older versions of user terminals ("legacy" stations) to remain deployed in an enterprise, extending their useful lifetime, while allowing newer SDMA user terminals to be introduced as deemed appropriate.

The system 100 employs multiple transmit and multiple receive antennas for data transmission on the downlink and uplink. The access point 110 is equipped with *Nₐₚ* antennas and represents the multiple-input (MI) for downlink transmissions and the multiple-output (MO) for uplink transmissions. A set of *K* selected user terminals 120 collectively represents the multiple-output for downlink transmissions and the multiple-input for uplink transmissions. For pure SDMA, it is desired to have *Nₐₚ* ≥ *K* ≥ 1 if the data symbol streams for the *K* user terminals are not multiplexed in code, frequency or time by some means. *K* may be greater than *Nₐₚ* if the data symbol streams can be multiplexed using TDMA technique, different code channels with CDMA, disjoint sets of subbands with OFDM, and so on. Each selected user terminal transmits user-specific data to and/or receives user-specific data from the access point. In general, each selected user terminal may be equipped with one or multiple antennas (i.e., *Nᵤₜ* ≥1). The *K* selected user terminals can have the same or different number of antennas.

The SDMA system may be a time division duplex (TDD) system or a frequency division duplex (FDD) system. For a TDD system, the downlink and uplink share the same frequency band. For an FDD system, the downlink and uplink use different frequency bands. MIMO system 100 may also utilize a single carrier or multiple carriers for transmission. Each user terminal may be equipped with a single antenna (e.g., in order to keep costs down) or multiple antennas (e.g., where the additional cost can be supported). The system 100 may also be a TDMA system if the user terminals 120 share the same frequency channel by dividing transmission/reception into different time slots, each time slot being assigned to different user terminal 120.

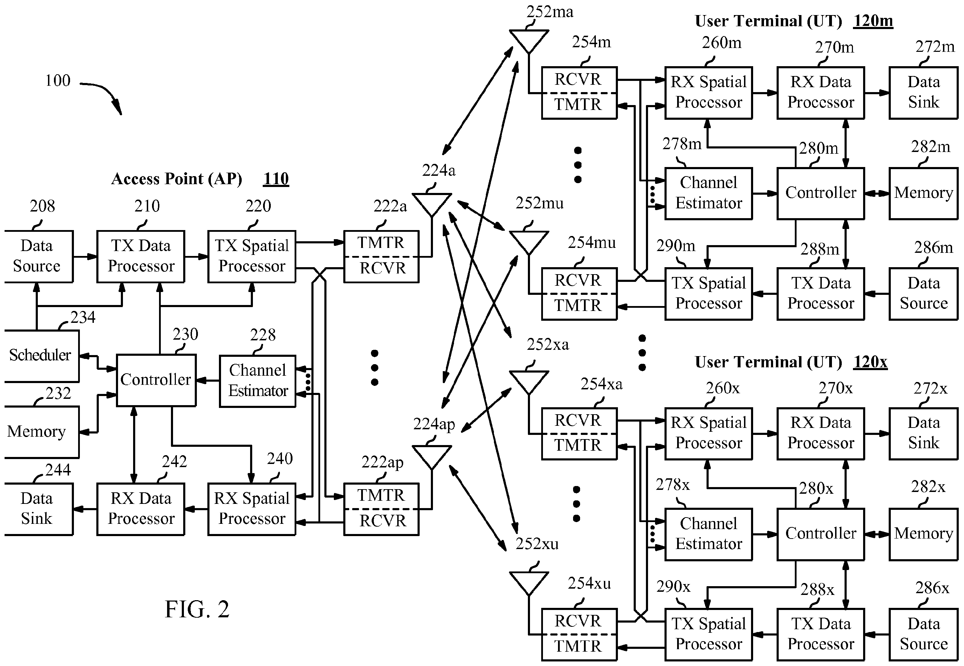

FIG. 2 illustrates a block diagram of access point 110 and two user terminals 120m and 120x in MIMO system 100. The access point 110 is equipped with *Nₜ* antennas 224a through 224t. User terminal 120m is equipped with *N_{ut,m}* antennas 252ma through 252mu, and user terminal 120x is equipped with *N_{ut,x}* antennas 252xa through 252xu. The access point 110 is a transmitting entity for the downlink and a receiving entity for the uplink. Each user terminal 120 is a transmitting entity for the uplink and a receiving entity for the downlink. As used herein, a "transmitting entity" is an independently operated apparatus or device capable of transmitting data via a wireless channel, and a "receiving entity" is an independently operated apparatus or device capable of receiving data via a wireless channel. In the following description, the subscript "*dn*" denotes the downlink, the subscript *"up"* denotes the uplink, *Nᵤₚ* user terminals are selected for simultaneous transmission on the uplink, *N_{dn}* user terminals are selected for simultaneous transmission on the downlink, *Nᵤₚ* may or may not be equal to *N_{dn}*, and *Nᵤₚ* and *N_{dn}* may be static values or can change for each scheduling interval. The beam-steering or some other spatial processing technique may be used at the access point and user terminal.

On the uplink, at each user terminal 120 selected for uplink transmission, a transmit (TX) data processor 288 receives traffic data from a data source 286 and control data from a controller 280. TX data processor 288 processes (e.g., encodes, interleaves, and modulates) the traffic data for the user terminal based on the coding and modulation schemes associated with the rate selected for the user terminal and provides a data symbol stream. A TX spatial processor 290 performs spatial processing on the data symbol stream and provides *N*_{*ut*,*m*} transmit symbol streams for the *N*_{*ut*,*m*} antennas. Each transmitter unit (TMTR) 254 receives and processes (e.g., converts to analog, amplifies, filters, and frequency upconverts) a respective transmit symbol stream to generate an uplink signal. *N*_{*ut*,*m*} transmitter units 254 provide *N*_{*ut*,*m*} uplink signals for transmission from *N*_{*ut*,*m*} antennas 252 to the access point.

*Nᵤₚ* user terminals may be scheduled for simultaneous transmission on the uplink. Each of these user terminals performs spatial processing on its data symbol stream and transmits its set of transmit symbol streams on the uplink to the access point.

At access point 110, *Nₐₚ* antennas 224a through 224ap receive the uplink signals from all *Nᵤₚ* user terminals transmitting on the uplink. Each antenna 224 provides a received signal to a respective receiver unit (RCVR) 222. Each receiver unit 222 performs processing complementary to that performed by transmitter unit 254 and provides a received symbol stream. An RX spatial processor 240 performs receiver spatial processing on the *Nₐₚ* received symbol streams from *Nₐₚ* receiver units 222 and provides *Nᵤₚ* recovered uplink data symbol streams. The receiver spatial processing is performed in accordance with the channel correlation matrix inversion (CCMI), minimum mean square error (MMSE), soft interference cancellation (SIC), or some other technique. Each recovered uplink data symbol stream is an estimate of a data symbol stream transmitted by a respective user terminal. An RX data processor 242 processes (e.g., demodulates, deinterleaves, and decodes) each recovered uplink data symbol stream in accordance with the rate used for that stream to obtain decoded data. The decoded data for each user terminal may be provided to a data sink 244 for storage and/or a controller 230 for further processing.

On the downlink, at access point 110, a TX data processor 210 receives traffic data from a data source 208 for *N_{dn}* user terminals scheduled for downlink transmission, control data from a controller 230, and possibly other data from a scheduler 234. The various types of data may be sent on different transport channels. TX data processor 210 processes (e.g., encodes, interleaves, and modulates) the traffic data for each user terminal based on the rate selected for that user terminal. TX data processor 210 provides *N_{dn}* downlink data symbol streams for the *N_{dn}* user terminals. A TX spatial processor 220 performs spatial processing (such as a precoding or beamforming, as described in the present disclosure) on the *N_{dn}* downlink data symbol streams, and provides *Nₐₚ* transmit symbol streams for the *Nₐₚ* antennas. Each transmitter unit 222 receives and processes a respective transmit symbol stream to generate a downlink signal. *Nₐₚ* transmitter units 222 providing *Nₐₚ* downlink signals for transmission from *Nₐₚ* antennas 224 to the user terminals.

At each user terminal 120, *N*_{*ut*,*m*} antennas 252 receive the *Nₐₚ* downlink signals from access point 110. Each receiver unit 254 processes a received signal from an associated antenna 252 and provides a received symbol stream. An RX spatial processor 260 performs receiver spatial processing on *N*_{*ut*,*m*} received symbol streams from *N*_{*ut*,*m*} receiver units 254 and provides a recovered downlink data symbol stream for the user terminal. The receiver spatial processing is performed in accordance with the CCMI, MMSE or some other technique. An RX data processor 270 processes (e.g., demodulates, deinterleaves and decodes) the recovered downlink data symbol stream to obtain decoded data for the user terminal.

At each user terminal 120, a channel estimator 278 estimates the downlink channel response and provides downlink channel estimates, which may include channel gain estimates, SNR estimates, noise variance and so on. Similarly, a channel estimator 228 estimates the uplink channel response and provides uplink channel estimates. Controller 280 for each user terminal typically derives the spatial filter matrix for the user terminal based on the downlink channel response matrix *H*_{*dn*,*m*} for that user terminal. Controller 230 derives the spatial filter matrix for the access point based on the effective uplink channel response matrix *H*_{*up*,}*_{eff}.* Controller 280 for each user terminal may send feedback information (e.g., the downlink and/or uplink eigenvectors, eigenvalues, SNR estimates, and so on) to the access point. Controllers 230 and 280 also control the operation of various processing units at access point 110 and user terminal 120, respectively.

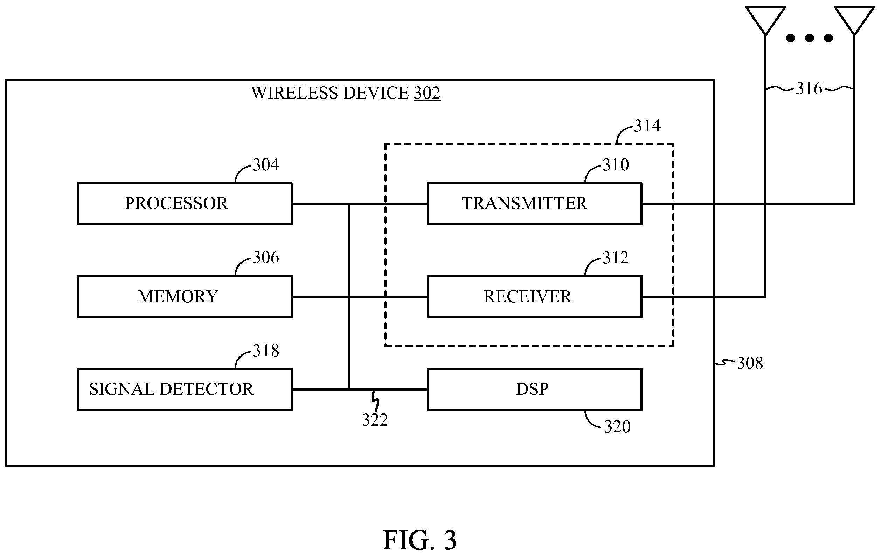

FIG. 3 illustrates various components that may be utilized in a wireless device 302 that may be employed within the MIMO system 100. The wireless device 302 is an example of a device that may be configured to implement the various methods described herein. The wireless device 302 may be an access point 110 or a user terminal 120.

The wireless device 302 may include a processor 304 which controls operation of the wireless device 302. The processor 304 may also be referred to as a central processing unit (CPU). Memory 306, which may include both read-only memory (ROM) and random access memory (RAM), provides instructions and data to the processor 304. A portion of the memory 306 may also include non-volatile random access memory (NVRAM). The processor 304 typically performs logical and arithmetic operations based on program instructions stored within the memory 306. The instructions in the memory 306 may be executable to implement the methods described herein.

The wireless device 302 may also include a housing 308 that may include a transmitter 310 and a receiver 312 to allow transmission and reception of data between the wireless device 302 and a remote location. The transmitter 310 and receiver 312 may be combined into a transceiver 314. A single or a plurality of transmit antennas 316 may be attached to the housing 308 and electrically coupled to the transceiver 314. The wireless device 302 may also include (not shown) multiple transmitters, multiple receivers, and multiple transceivers.

The wireless device 302 may also include a signal detector 318 that may be used in an effort to detect and quantify the level of signals received by the transceiver 314. The signal detector 318 may detect such signals as total energy, energy per subcarrier per symbol, power spectral density and other signals. The wireless device 302 may also include a digital signal processor (DSP) 320 for use in processing signals.

The various components of the wireless device 302 may be coupled together by a bus system 322, which may include a power bus, a control signal bus, and a status signal bus in addition to a data bus.

### EXAMPLE TXOP SHARING

In some cases, relays may be allowed to share a transmit opportunity (TXOP), for example, in order to relay a frame in the same TXOP in which that frame was received. TXOP sharing may help minimize power consumption and a number of channel contentions.

An AP or STA may be an initiator of an exchange in which TXOP sharing is used. For example, an AP may send a frame that is forwarded by a relay to a STA, in the same TXOP. Alternately, a STA may send a frame that is forwarded by a relay to an AP, in the same TXOP. In some cases, the frame may be a short frame, for example, a short frame may be a MAC protocol data unit (MPDU) having a protocol version field in a frame control field (FCF) set to 1. As will be described in greater detail below, the short frame may have one or more bits to control behavior of TXOP sharing.

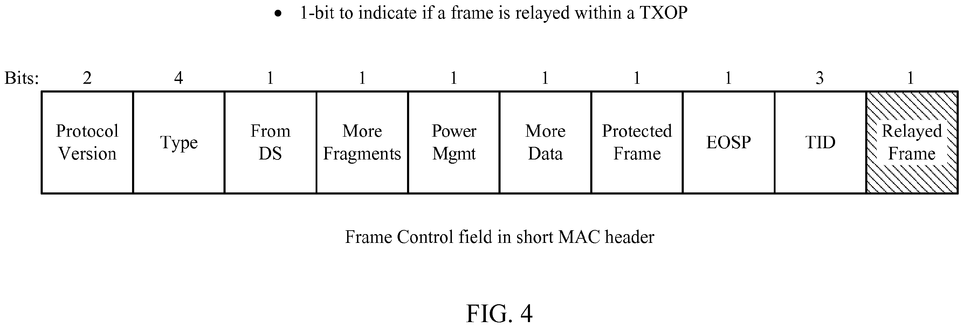

As illustrated in FIG. 4, in some cases, the short frame may have a frame control field (FCF) with a bit that may be use to control TXOP sharing. In the illustrated example, the FCF may have a bit referred to herein as a Relayed Frame bit that may be used to indicate if a frame is relayed within a TXOP. In some cases, this bit may be set in an initiating frame (e.g. DATA), to indicate capability for implicit ACK. In some cases, this bit may be set in a responding frame (e.g. ACK, CTS), to indicate a relay shall share the TXOP and continue to transmit (forward) the frame over the next hop after SIFS time.

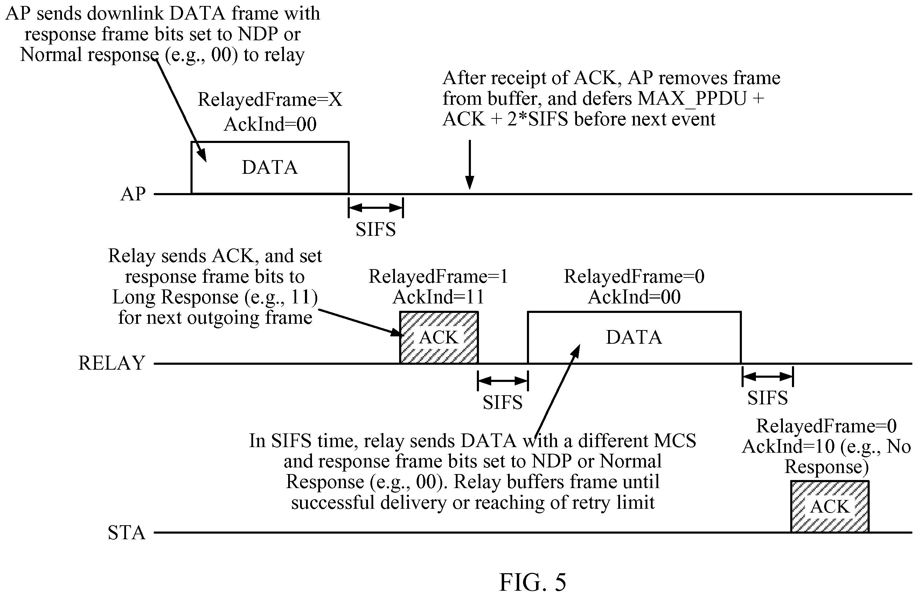

FIG. 5 illustrates an example were an AP is an initiator and an explicit ACK procedure is used. As illustrated, an AP may send a downlink DATA frame with response indication (or "response frame") bits set to indicate an NDP or normal response (e.g., with response indication bits set to 00) to the relay. After the relay receives the downlink DATA frame, the relay may send an ACK and set the response indication bits to indicate a long response (e.g., with response indication bits set to 11) for a next outgoing frame. After SIFS time, the relay may retransmit the DATA frame with a difference MCS and response indication bits set to again indicate an NDP or normal response (e.g., with response indication bits set to 00). The relay may buffer the DATA frame until successful delivery or until reaching a retry limit. According to certain aspects, upon successful receipt of the DATA frame, and after SIFS time, the STA may transmit an ACK with response indication bits set to indicate no response (e.g., with response indication bits set to 10).

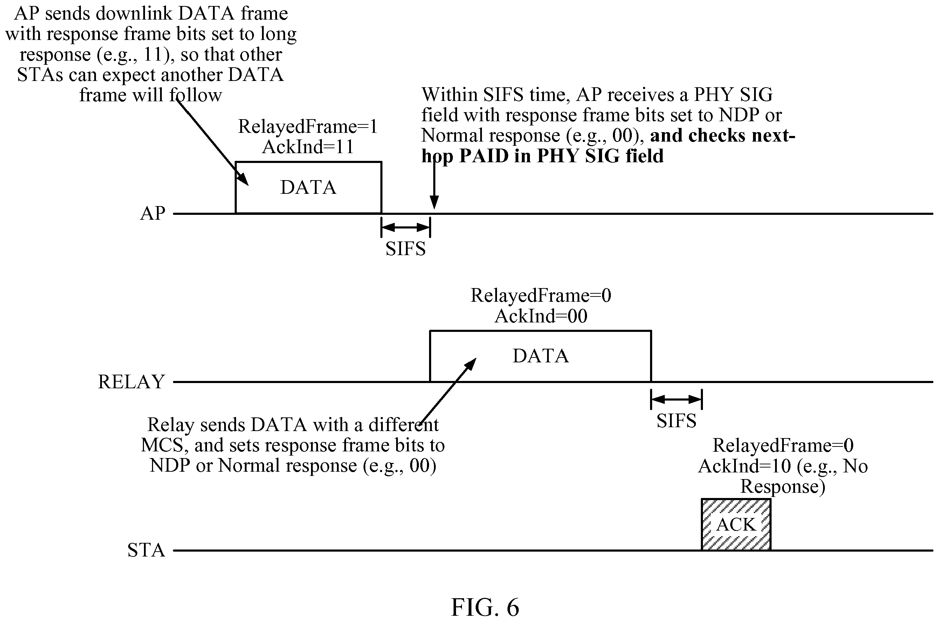

FIG. 6 illustrates an example were an AP is an initiator and an implicit ACK procedure is used. As illustrated, an AP may transmit a downlink DATA frame with response indication bits set to indicate a long response (e.g., set to 11), so that other STAs may expect another DATA frame will follow. Within SIFS, the AP may receive a PHY SIG field with response indication bits set to indicate a NDP or normal response (e.g., set to 00). The AP may then check the next-hop PAID in the PHY SIG field. The relay may retransmit the DATA frame with a different MCS and set the response indication bits to indicate a NDP or normal response (e.g., set to 00). According to certain aspects, upon successful receipt of the DATA frame, and after SIFS time, the STA may transmit an ACK with response indication bits set to no response (e.g., set to 10).

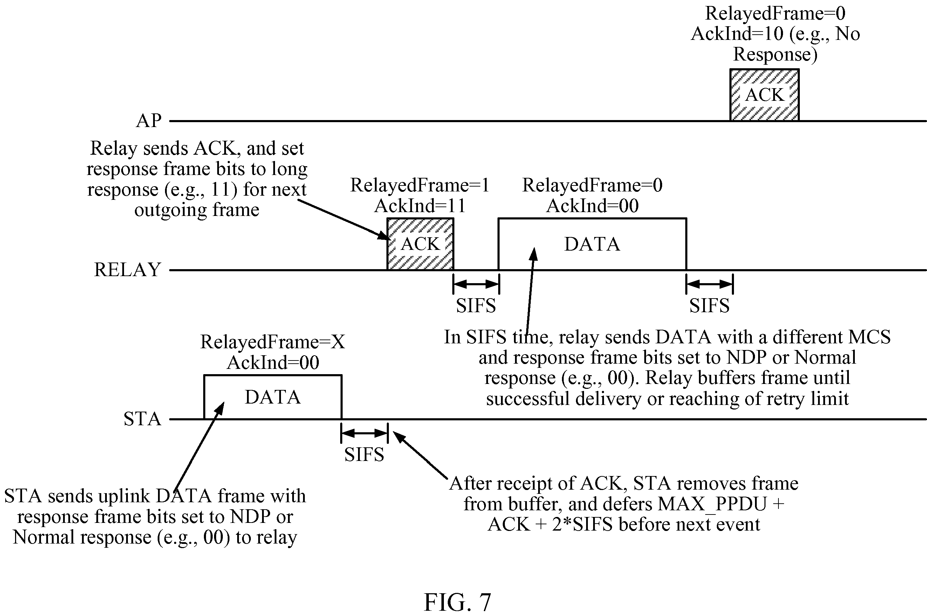

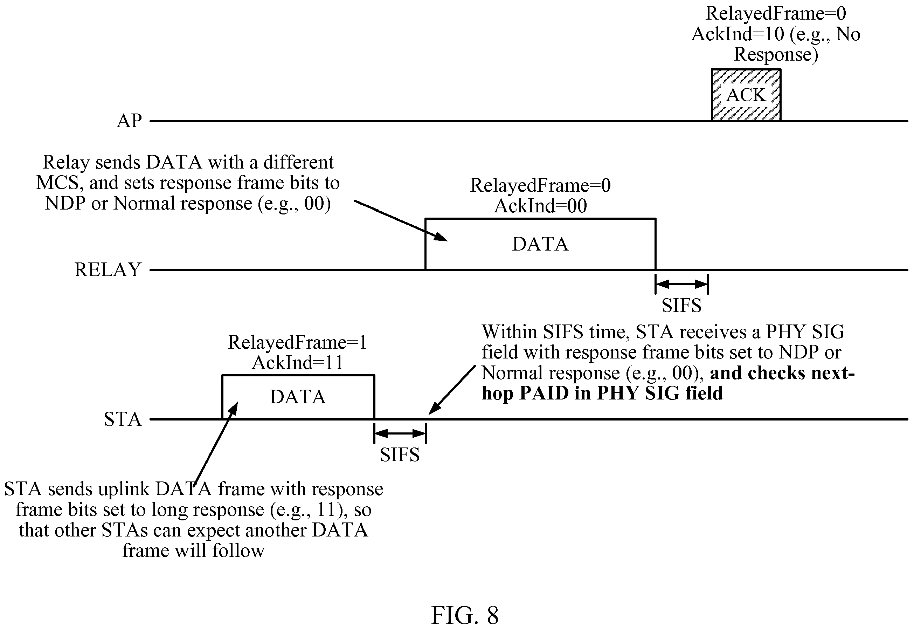

FIG. 7 illustrates an example were a STA is an initiator and an explicit ACK procedure is used. For example, as illustrated, a STA may send an uplink DATA frame to the relay with response indication bits set to NDP or normal response (e.g., set to 00). After SIFS time, the relay may send an ACK and set the response frame bits to 00 for a next outgoing frame. After receipt of the ACT, the STA may remove the DATA frame from buffer and may defer MAX_PPDU + ACK +2*SIFS before a next event. According to certain aspects, after SIFS time, the relay may retransmit the DATA frame with a different MCS and response indication bits set to NDP or normal response (e.g., set to 00). The relay may buffer the DATA frame until successful delivery or until a retry limit is reached. According to certain aspects, upon successful receipt of the DATA frame, and after SIFS time, the AP may transmit an ACK with response indication bits set to no response (e.g., set to 10).FIG. 8 illustrates an example were a STA is an initiator and an implicit ACK procedure is used. For example, as illustrated, an STA may send an uplink DATA frame with response indication bits set to long response (e.g., set to 11), so that other STAs may expect another data frame will follow. According to certain aspects, within SIFS time, the STA may receive a PHY SIG field with response indication bits set to NDP or normal response (e.g., set to 00) and the STA may check a next-hop PAID in the PHY SIG field. Additionally, after SIFS time, the relay may retransmit the DATA frame with a different MCS and may set the response indication bits to NDP or normal response (e.g., set to 00). According to certain aspects, upon successful receipt of the DATA frame, and after SIFS time, the AP may transmit an ACK with response indication bits set to no response (e.g., set to 10).

In some cases, it may be desirable for an initiator to be able to disable whether or not TXOP sharing is allowed. For example, in some cases, there may be limits on TXOP duration and an initiator may want to prohibit a relay from forwarding a frame that would be outside this limit.

In some cases, the initiator may indicate, via a value of at least one bit of a short MAC header of a short frame, whether to allow transmit opportunity (TXOP) sharing during or not. For example, this indication may be provided via a Relayed frame bit. If this bit is set to zero, TXOP sharing may not be allowed. On the other hand, if this bit is set to 1, TXOP sharing may be allowed. A relay receiving a transmitted frame may, thus, examine this bit to determine whether it may forward the frame in the same TXOP or not.

In some cases, this bit may override other signaling mechanisms with regard to TXOP sharing behavior. For example, while a More Data field may be used to indicate a frame could be relayed, the Relayed frame bit may override any indication provided by the More Data field. In some cases, both types of field may be used and a relay may act in a determined manner. For example, an initiator may send a first frame with both the Relayed Frame bit set and More Data bit set. In this case, TXOP sharing may be enabled (allowed) and the relay may forward the frame. In some cases, the relay may set one or more bits in the forwarded frame indicating a long response is expected. This may give (control of) the TXOP back to the initiator. The initiator may then send another frame, with or without TXOP sharing enabled, depending on the scenario.

According to certain aspects, if both More Data and Relayed Frame bits are set, the relay may be required to use implicit ACK only. In other words, in this case it may not be allowed to use explicit ACK.

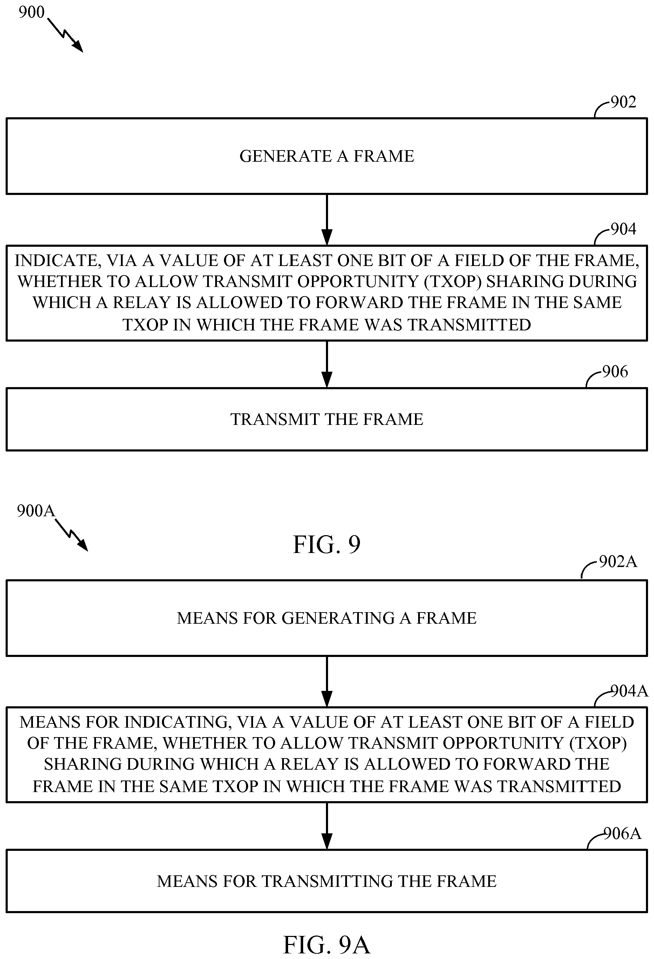

FIG. 9 illustrates example operations 900 that may be performed by an initiator (e.g., a STA or AP initiating a speed frame exchange). The operations 900 begin, at 902, by generating a frame. At 904, the initiator may indicate, via a value of at least one bit of field of the frame, whether to allow transmit opportunity (TXOP) sharing during which a relay is allowed to forward the frame in the same TXOP in which the frame was transmitted. According to certain aspects, the frame may comprise a short frame and the field may comprise a field of a short media access control (MAC) header. At 906, the initiator may transmit the frame. While not shown, those skilled in the art will appreciate that a relay may perform corresponding operations to those shown in FIG. 9 (e.g., receiving a frame sent by the initiator and determining whether TXOP sharing is allowed based on a bit in the frame).

In some cases, the short frame may be a MAC protocol data unit (MPDU) having a protocol version field in a frame control field (FCF) set to 1. As described above, the at least one bit of the short MAC header may be a Relayed Frame bit used to indicate a frame is relayed within a transmit opportunity (TXOP). As described above, the value of the at least one bit controls behavior of TXOP sharing regardless of a value of a More Data field in the short frame.

As noted above, if TXOP sharing was enabled, the initiator may receive the short frame forwarded by the relay in the same TXOP, generate another short frame, and transmit the other short frame in the same TXOP. The received short frame may have one or more (response/ACK indication) bits set indicating a long response is expected, effectively giving control of the TXOP back to the initiator.

### EXAMPLE FLOW CONTROL

According to certain aspects, combinations of signaled bits may be used for flow control purposes. For example, certain combinations of bits in a frame may be used to signal certain information to an intended receiver. As an example, a device that is an AP can indicate an intended STA is not to transmit UL data frame to the AP for a given time interval (e.g., specified in a duration field) by setting a relayed frame bit to 1 and a duration Indication bit to 1. This may be used to accomplish flow control, effectively specifying that the receiving STA (and eventually all STAs associated to the AP or Relay AP) should not transmit any UL data to the device it is associated with for a time period specified in the Duration field of the frame.

As an example, according to certain aspects a device (e.g., a station) may accomplish flow control by indicating, via a combination of values in at least one bit of a short MAC header and at least one bit in a signal (SIG) field of a physical layer (PHY) header of a null data packet (NDP) MAC frame, that a receiving apparatus is not to transmit data to a responding apparatus for a specified duration. The device may then transmit the NDP MAC frame to achieve the desired flow control. According to certain aspects, the NDP MAC frame may comprise an NDP acknowledgement (ACK) frame and the at least one bit of the short MAC header comprises a Relayed Frame bit used to indicate a frame is relayed within a transmit opportunity (TXOP). According to certain aspects, the at least one bit of the SIG field comprises a Duration Indication bit. According to certain aspects, the at least one bit in the SIG field may include an idle indication bit and the at least one bit in the MAC header may include a relayed frame bit. According to certain aspects, the specified duration is indicated via a duration field (e.g., of the NDP ACK frame).

Certain aspects of the present disclosure provide other types of "flow suspend" signaling. As an example, NDP ACK signaling the "flow suspend" may be used to shutdown a whole BSS for a duration indicated by the NDP ACK. It may be note that there is no BSSID address in an NDP ACK, but the frame that elicited the NDP ACK may be used to indicate which STAs should suspend their UL transactions.

This type of flow control may be considered a rule, along the lines as follows:
The Duration field of NDP ACK may indicate the length of time receiving STAs are not permitted to transmit Data frames to the STA identified by the RA field of the frame that elicited the NDP ACK (with flow suspend information) with Relayed Frame and Duration indication set to 1.
While described with reference to NDP ACK, this same type of rule may be valid for different types of response frames (e.g., TACK/STACK/BAT).

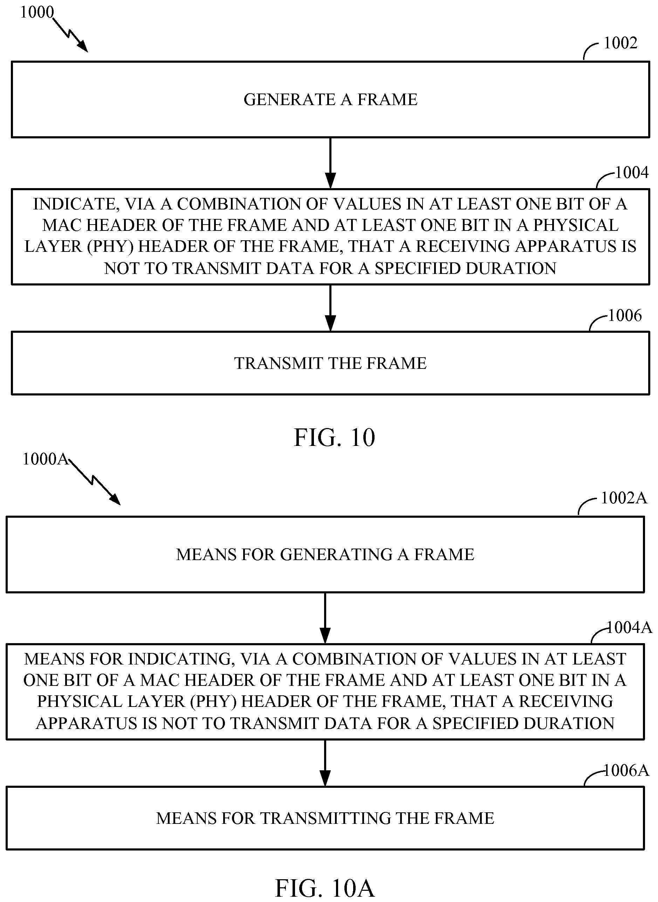

FIG. 10 illustrates example operations 1000 that may be performed by an apparatus (e.g., a STA or AP). The operations 1000 begin, at 1002, by generating a frame. At 1004, the apparatus may indicate, via a combination of values in at least one bit of a MAC header of the frame and at least one bit in a physical layer (PHY) header of the frame, that a receiving apparatus is not to transmit data for a specified duration. At 1006, the apparatus may transmit the frame. According to certain aspects, the frame may comprise a null packet (NDP) MAC frame, and the at least one bit in the PHY header may comprise at least one bit in a signal (SIG) field of the PHY header. Additionally, according to certain aspects, the MAC header may comprise a short MAC header.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering. For example, operations 900 and 1000 illustrated in FIGs. 9 and 10 correspond to means 900A and 1000A illustrated in FIGs. 9A and 10A, respectively.

For example, an initiator (e.g., a STA 120 or AP 110 initiating a speed frame exchange) may include means for generating a frame; means for indicating, via a value of at least one bit of a field of the frame, whether to allow transmit opportunity (TXOP) sharing during which a relay is allowed to forward the frame in the same TXOP in which the frame was transmitted; and means for transmitting the frame.

According to certain aspects, an apparatus (e.g., a STA 120 or AP 110) may include means for generating a frame; means for indicating, via a combination of values in at least one bit of a MAC header of the frame and at least one bit in a physical layer (PHY) header of the frame, that a receiving apparatus is not to transmit data for a specified duration; and means for transmitting the frame.

According to certain aspects, means for transmitting may comprise a transmitter (e.g., the transmitter unit 222) and/or an antenna(s) 224 of the access point 110 illustrated in FIG. 2 or the transmitter 310 and/or antenna(s) 316 depicted in FIG. 3. Means for receiving may comprise a receiver (e.g., the receiver unit 222) and/or an antenna(s) 224 of the access point 110 illustrated in FIG. 2 or the receiver 312 and/or antenna(s) 316 depicted in FIG. 3.

According to certain aspects, means for generating, means for processing and/or means for indicating may comprise a processing system, which may include one or more processors, such as the RX data processor 242, the TX data processor 210, and/or the controller 230 of the access point 110 illustrated in FIG. 2 or the processor 304 and/or the DSP 320 portrayed in FIG. 3.

According to certain aspects, such means may be implemented by processing systems configured to perform the corresponding functions by implementing various algorithms (e.g., in hardware or by executing software instructions). For example, an algorithm for setting one or more bits to indicate whether TXOP sharing is allowed may receive, as input, a maximum value of a TXOP duration and determine whether there is time, within the limit, for the relay to forward the frame. Similarly, an algorithm for determining whether or not TXOP sharing is allowed (by the relay) may receive, as input, the one or more bits in the frame set by the initiator as an indication.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

As used herein, a phrase referring to "at least one of" a list of items refers to any combination of those items, including single members. As an example, "at least one of: a, b, or c" is intended to cover a, b, c, a-b, a-c, b-c, and a-b-c.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, EPROM memory, EEPROM memory, registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware, or any combination thereof. If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a user terminal 120 (see FIG. 1), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further.

The processor may be responsible for managing the bus and general processing, including the execution of software stored on the machine-readable media. The processor may be implemented with one or more general-purpose and/or special-purpose processors. Examples include microprocessors, microcontrollers, DSP processors, and other circuitry that can execute software. Software shall be construed broadly to mean instructions, data, or any combination thereof, whether referred to as software, firmware, middleware, microcode, hardware description language, or otherwise. Machine-readable media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product. The computer-program product may comprise packaging materials.

In a hardware implementation, the machine-readable media may be part of the processing system separate from the processor. However, as those skilled in the art will readily appreciate, the machine-readable media, or any portion thereof, may be external to the processing system. By way of example, the machine-readable media may include a transmission line, a carrier wave modulated by data, and/or a computer product separate from the wireless node, all which may be accessed by the processor through the bus interface. Alternatively, or in addition, the machine-readable media, or any portion thereof, may be integrated into the processor, such as the case may be with cache and/or general register files.

The processing system may be configured as a general-purpose processing system with one or more microprocessors providing the processor functionality and external memory providing at least a portion of the machine-readable media, all linked together with other supporting circuitry through an external bus architecture. Alternatively, the processing system may be implemented with an ASIC (Application Specific Integrated Circuit) with the processor, the bus interface, the user interface in the case of an access terminal), supporting circuitry, and at least a portion of the machine-readable media integrated into a single chip, or with one or more FPGAs (Field Programmable Gate Arrays), PLDs (Programmable Logic Devices), controllers, state machines, gated logic, discrete hardware components, or any other suitable circuitry, or any combination of circuits that can perform the various functionality described throughout this disclosure. Those skilled in the art will recognize how best to implement the described functionality for the processing system depending on the particular application and the overall design constraints imposed on the overall system.

The machine-readable media may comprise a number of software modules. The software modules include instructions that, when executed by the processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

If implemented in software, the functions may be stored or transmitted over as one or more instructions or code on a computer-readable medium. Computer-readable media include both computer storage media and communication media including any medium that facilitates transfer of a computer program from one place to another. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray® disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer- readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein. For certain aspects, the computer program product may include packaging material.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

## Claims

1. An apparatus (900A) for wireless communications, comprising:
means (902A) for generating configured to generate a frame;
means (904A) for indicating configured to indicate, via a value of at least one bit of a field of the frame, whether to allow transmit opportunity, TXOP, sharing during which a relay is allowed to forward the frame in the same TXOP in which the frame was transmitted, wherein the frame comprises a short frame and the field comprises a field of a short media access control, MAC, header of the short frame, wherein the value of the at least one bit controls behavior of TXOP sharing regardless of a value of a More Data field in the short frame; and
means (906A) for transmitting configured to transmit the frame.

2. The apparatus (900A) of claim 1, wherein the short frame comprises a MAC protocol data unit (MPDU) having a protocol version field in a frame control field, FCF, set to 1.

3. The apparatus (900A) of claim 1, wherein the at least one bit of the short MAC header comprises a Relayed Frame bit used to indicate a frame is allowed to be relayed within a transmit opportunity, TXOP.

4. The apparatus (900A) of claim 1, wherein:
the apparatus further comprises means configured to receive the short frame forwarded by the relay in the same TXOP;
the means (902A) for generating configured to generate a second short frame; and
the means (906A) for transmitting configured to transmit the second short frame in the same TXOP.

5. The apparatus (900A) of claim 4, wherein:
the received short frame has one or more bits that were set by the relay to indicate a long response is expected; and
the means (902A) for generating configured to generate the second short frame in response to determining the long response is expected based on the one or more bits.

6. A method (900) for wireless communications, comprising:
generating (902) a frame;
indicating (904), via a value of at least one bit of a field of the frame, whether to allow transmit opportunity, TXOP, sharing during which a relay is allowed to forward the frame in the same TXOP in which the frame was transmitted, wherein the frame comprises a short frame and the field comprises a field of a short media access control, MAC, header, wherein the value of the at least one bit controls behavior of TXOP sharing regardless of a value of a More Data field in the short frame; and
transmitting (906) the frame.

7. The method (900) of claim 6, wherein the short frame comprises a MAC protocol data unit, MPDU, having a protocol version field in a frame control field, FCF, set to 1.

8. The method (900) of claim 6, wherein the at least one bit of the short MAC header comprises a Relayed Frame bit used to indicate a frame is allowed to be relayed within a transmit opportunity, TXOP.

9. The method (900) of claim 6, further comprising:
receiving the short frame forwarded by the relay in the same TXOP;
generating a second short frame to be transmitted in the same TXOP.

10. The method (900) of claim 9, wherein;
the received short frame has one or more bits that were set by the relay to indicate a long response is expected; and
the second short frame is generated in response to determining the long response is expected based on the one or more bits.

11. A computer-readable medium comprising instructions which when executed by the computer cause the computer to:
generate a frame;
indicate, via a value of at least one bit of a field of the frame, whether to allow transmit opportunity, TXOP, sharing during which a relay is allowed to forward the frame in the same TXOP in which the frame was transmitted, wherein the frame comprises a short frame and the field comprises a field of a short media access control, MAC, header, wherein the value of the at least one bit controls behavior of TXOP sharing regardless of a value of a More Data field in the short frame; and
transmit the frame.

12. The computer-readable medium of claim 11, wherein the short frame comprises a MAC protocol data unit, MPDU, having a protocol version field in a frame control field, FCF, set to 1.

13. The computer-readable medium of claim 11, wherein the at least one bit of the short MAC header comprises a Relayed Frame bit used to indicate a frame is allowed to be relayed within a transmit opportunity, TXOP.

14. An access terminal comprising the apparatus (900A) of any of claims 1 to 5.

15. An access point comprising the apparatus (900A) of any of claims 1 to 5.

## Patentansprüche

1. Eine Vorrichtung (900A) für Drahtloskommunikationen, die Folgendes aufweist:
Mittel (902A) zum Generieren, die konfiguriert sind zum Generieren eines Rahmens bzw. Frames;
Mittel (904A) zum Anzeigen, die konfiguriert sind zum Anzeigen, über einen Wert wenigstens eines Bits eines Feldes in dem Rahmen, ob Sendegelegenheits-Mitbenutzung bzw. TXOP-Sharing (TXOP = transmission opportunity) gestattet ist, während der bzw. dem es einer Relais- bzw. Weiterleitungseinheit gestattet ist, den Rahmen in derselben TXOP weiterzuleiten, in der der Rahmen gesendet wurde, wobei der Rahmen einen kurzen Rahmen aufweist und das Feld ein Feld eines kurzen Medienzugriffssteuerungs- bzw. MAC-Headers (MAC = media access control) des kurzen Rahmens aufweist, wobei der Wert des wenigstens einen Bits das Verhalten von TXOP-Sharing steuert, unabhängig von einem Wert eines More-Data- bzw. Mehr-Daten-Feldes in dem kurzen Rahmen; und
Mittel (906A) zum Senden, die konfiguriert sind, um den Rahmen zu senden.

2. Vorrichtung (900A) nach Anspruch 1, wobei der kurze Rahmen eine MAC-Protokolldateneinheit bzw. MPDU (MPDU = MAC protocol data unit) aufweist, die ein Protokollversionsfeld in einem Rahmensteuerfeld bzw. FCF (FCF = frame control field) hat, das auf 1 gesetzt ist.

3. Vorrichtung (900A) nach Anspruch 1, wobei das wenigstens eine Bit des kurzen MAC-Headers ein Relayed-Frame- bzw. Weitergeleiteter-Rahmen-Bit aufweist, das verwendet wird um anzuzeigen, dass es einem Rahmen gestattet ist, innerhalb einer Sendegelegenheit bzw. TXOP weitergeleitet zu werden.

4. Vorrichtung (900A) nach Anspruch 1, wobei:
die Vorrichtung weiter Mittel aufweist, die konfiguriert sind zum Empfangen des kurzen Rahmens, der durch die Relais- bzw. Weiterleitungseinheit in derselben TXOP weitergeleitet wird;
die Mittel (902A) zum Generieren konfiguriert sind zum Generieren eines zweiten kurzen Rahmens; und
die Mittel (906A) zum Senden konfiguriert sind zum Senden des zweiten kurzen Rahmens in derselben TXOP.

5. Vorrichtung (900A) nach Anspruch 4, wobei:
der empfangene kurze Rahmen ein oder mehrere Bits hat, die durch die Relais- bzw. Weiterleitungseinheit gesetzt wurden, um anzuzeigen, dass eine lange Antwort erwartet wird; und
die Mittel (902A) zum Generieren konfiguriert sind zum Generieren des zweiten kurzen Rahmens ansprechend auf Bestimmen, dass die lange Antwort erwartet wird, basierend auf dem einen oder den mehreren Bits.

6. Ein Verfahren (900) für Drahtloskommunikationen, das Folgendes aufweist:
Generieren (902) eines Rahmens;
Anzeigen (904), über einen Wert wenigstens eines Bits eines Feldes des Rahmens, ob Sendegelegenheits-Mitbenutzung bzw. TXOP-Sharing (TXOP = transmit opportunity) gestattet werden soll, während der bzw. dem es einer Relais- bzw. Weiterleitungseinheit gestattet ist, den Rahmen in derselben TXOP weiterzuleiten, in der der Rahmen gesendet wurde, wobei der Rahmen einen kurzen Rahmen aufweist und das Feld ein Feld eines kurzen Medienzugriffssteuerungs- bzw. MAC-Headers (MAC = media access control) aufweist, wobei der Wert des wenigstens einen Bits das Verhalten von TXOP-Sharing steuert, unabhängig von einem Wert eines More-Data- bzw. Mehr-Daten-Feldes in dem kurzen Rahmen; und
Senden (906) des Rahmens.

7. Verfahren (900) nach Anspruch 6, wobei der kurze Rahmen eine MAC-Protokolldateneinheit bzw. MPDU (MPDU = MAC protocol data unit) aufweist, die ein Protokollversionsfeld in einem Rahmensteuerfeld bzw. FCF (FCF = frame control field) hat, das auf 1 gesetzt ist.

8. Verfahren (900) nach Anspruch 6, wobei das wenigstens eine Bit des kurzen MAC-Headers ein Relayed-Frame- bzw. Weitergeleiteter-Rahmen-Bit aufweist, das verwendet wird um anzuzeigen, dass es einem Rahmen gestattet ist, innerhalb einer Sendegelegenheit bzw. TXOP weitergeleitet zu werden.

9. Verfahren (900) nach Anspruch 6, das weiter Folgendes aufweist:
Empfangen des kurzen Rahmens, der durch die Relaiseinheit in derselben TXOP weitergeleitet wird;
Generieren eines zweiten kurzen Rahmens, der in derselben TXOP gesendet werden soll.

10. Verfahren (900) nach Anspruch 9, wobei:
der empfangene kurze Rahmen ein oder mehrere Bits hat, die durch die Relais- bzw. Weiterleitungseinheit gesetzt worden sind, um anzuzeigen, dass eine lange Antwort erwartet wird; und
der zweite Rahmen ansprechend auf Bestimmen generiert wird, dass die lange Antwort erwartet wird, basierend auf dem einen oder den mehreren Bits.

11. Ein computerlesbares Medium, das Instruktionen aufweist, die, wenn sie durch den Computer ausgeführt werden, den Computer veranlassen zum:
Generieren eines Rahmens;
Anzeigen, über einen Wert von wenigstens einem Bit eines Feldes in dem Rahmen, ob Sendegelegenheits-Mitbenutzung bzw. TXOP-Sharing (TXOP = transmit opportunity) gestattet werden soll, während der bzw. dem es einer Relais- bzw. Weiterleitungseinheit gestattet ist, den Rahmen in derselben TXOP weiterzuleiten, in der der Rahmen gesendet wurde, wobei der Rahmen einen kurzen Rahmen aufweist und das Feld ein Feld eines kurzen Medienzugriffssteuerungs- bzw. MAC-Headers (MAC = media access control) aufweist, wobei der Wert des wenigstens einen Bits das Verhalten von TXOP-Sharing steuert, unabhängig von einem Wert eines More-Data- bzw.
Mehr-Daten-Feldes in dem kurzen Rahmen; und
Senden des Rahmens.

12. Computerlesbares Medium nach Anspruch 11, wobei der kurze Rahmen eine MAC-Protokolldateneinheit bzw. MPDU (MPDU = MAC protocol data unit) aufweist, die ein Protokollversionsfeld in einem Rahmensteuerfeld bzw. FCF (FCF = frame control field) hat, das auf 1 gesetzt ist.

13. Computerlesbares Medium nach Anspruch 11, wobei das wenigstens eine Bit des kurzen MAC-Headers ein Relayed-Frame- bzw. Weitergeleiteter-Rahmen-Bit aufweist, das verwendet wird, um anzuzeigen, dass es einem Rahmen gestattet ist, innerhalb einer Sendegelegenheit bzw. TXOP (TXOP = transmit opportunity) weitergeleitet zu werden.

14. Ein Zugriffsendgerät, das die Vorrichtung (900A) nach einem der Ansprüche 1 bis 5 aufweist.

15. Ein Zugriffspunkt, der die Vorrichtung (900A) nach einem der Ansprüche 1 bis 5 aufweist.

## Revendications

1. Dispositif (900A) pour des communications sans fil, comprenant :
des moyens (902A) pour générer agencés pour générer une trame ;
des moyens (904A) pour indiquer agencés pour indiquer, par l'intermédiaire d'une valeur d'au moins un bit d'un champ de la trame, s'il faut autoriser un partage d'opportunité de transmission, TXOP, pendant lequel un relais est autorisé à transférer la trame dans la même TXOPque celle dans laquelle la trame a été transmise, la trame comprenant une trame courte et le champ comprenant un champ d'un en-tête court de contrôle d'accès au support, MAC, de la trame courte, la valeur dudit au moins un bit contrôlant le comportement du partage de TXOP sans tenir compte d'une valeur d'un champ More Dataprésent dans la trame courte ; et
des moyens (906A) pour transmettre agencés pour transmettre la trame.

2. Dispositif (900A) selon la revendication 1, dans lequel la trame courte comprend une unité de données de protocole MAC (MPDU) comportant un champ de version de protocole dans un champ de contrôle de trame, FCF, réglé à 1.

3. Dispositif (900A) selon la revendication 1, dans lequel ledit au moins un bit de l'en-tête MAC court comprend un bit Relayed Frame utilisé pour indiquer qu'une trame est autorisée à être relayée dans une opportunité de transmission, TXOP.

4. Dispositif (900A) selon la revendication 1, dans lequel :
le dispositif comprend en outre des moyens agencés pour recevoir la trame courte transférée par le relais dans la même TXOP ;
les moyens (902A) pour générer agencés pour générer une deuxième trame courte ; et
les moyens (906A) pour transmettre agencés pour transmettre la deuxième trame courte dans la même TXOP.

5. Dispositif (900A) selon la revendication 4, dans lequel :
la trame courte reçue comporte un ou plusieurs bits qui ont été réglés par le relais pour indiquer qu'une réponse longue est attendue ; et
les moyens (902A) pour générer sont agencés pour générer la deuxième trame courte en réponse à la détermination que la réponse longue est attendue sur la base desdits un ou plusieurs bits.

6. Procédé (900) pour des communications sans fil, comprenant :
générer (902) une trame ;
indiquer (904), par l'intermédiaire d'une valeur d'au moins un bit d'un champ de la trame, s'il faut autoriser un partage d'opportunité de transmission, TXOP, pendant lequel un relais est autorisé à transférer la trame dans la même TXOP que celle dans laquelle la trame a été transmise, la trame comprenant une trame courte et le champ comprenant un champ d'un en-tête court de contrôle d'accès au support, MAC, la valeur dudit au moins un bit contrôlant le comportement du partage de TXOP sans tenir compte d'une valeur d'un champ More Data présent dans la trame courte ; et
transmettre la trame.

7. Procédé (900) selon la revendication 6, dans lequel la trame courte comprend une unité de données de protocole MAC (MPDU) comportant un champ de version de protocole dans un champ de contrôle de trame, FCF, réglé à 1.

8. Procédé (900) selon la revendication 6, dans lequel ledit au moins au moins un bit de l'en-tête MAC court comprend un bit Relayed Frame utilisé pour indiquer qu'une trame est autorisée à être relayée dans une opportunité de transmission, TXOP.

9. Procédé (900) selon la revendication 6, comprenant en outre :
recevoir la trame courte transférée par le relais dans la même TXOP ;
générer une deuxième trame courte à transmettre dans la même TXOP.

10. Procédé (900) selon la revendication 9, dans lequel :
la trame courte reçue comporte un ou plusieurs bits qui ont été réglés par le relais pour indiquer qu'une réponse longue est attendue ; et
la deuxième trame courte est générée en réponse à une détermination que la réponse longue est attendue sur la base desdits un ou plusieurs bits.

11. Milieu lisible par un ordinateur comprenant des instructions qui lorsqu'elles sont exécutées par l'ordinateur amènent l'ordinateur à :
générer une trame ;
indiquer, par l'intermédiaire d'une valeur d'au moins un bit d'un champ de la trame, s'il faut autoriser un partage d'opportunité de transmission, TXOP, pendant lequel un relais est autorisé à transférer la trame dans la même TXOP que celle dans laquelle la trame a été transmise, la trame comprenant une trame courte et le champ comprenant un champ d'un en-tête court de contrôle d'accès au support, MAC, la valeur dudit au moins un bit contrôlant le comportement du partage de TXOP sans tenir compte d'une valeur d'un champ More Data présent dans la trame courte ; et
transmettre la trame.

12. Milieu lisible par un ordinateur selon la revendication 11, dans lequel la trame courte comprend une unité de données de protocole MAC (MPDU) comportant un champ de version de protocole dans un champ de contrôle de trame, FCF, réglé à 1.

13. Milieu lisible par un ordinateur selon la revendication 11, dans lequel ledit au moins un bit de l'en-tête MAC court comprend un bit Relayed Frame utilisé pour indiquer qu'une trame est autorisée à être relayée dans une opportunité de transmission, TXOP.

14. Terminal d'accès comprenant le dispositif (900A) de l'une quelconque des revendications 1 à 5.

15. Point d'accès comprenant le dispositif (900A) selon l'une quelconque des revendications 1 à 5.
